(19) Europäisches Patentamt
European Patent Office
Office européen des brevets

(11) EP 3 575 340 B1

(12) **EUROPEAN PATENT SPECIFICATION**

(45) Date of publication and mention of the grant of the patent:
**15.07.2020 Bulletin 2020/29**

(21) Application number: **17894197.7**

(22) Date of filing: **22.12.2017**

(51) Int Cl.:
***C08G 64/04*** *(2006.01)* ***C08K 5/13*** *(2006.01)*
***C08K 5/49*** *(2006.01)* ***C08L 69/00*** *(2006.01)*

(86) International application number:
**PCT/JP2017/046163**

(87) International publication number:
**WO 2018/139136 (02.08.2018 Gazette 2018/31)**

# (54) POLYCARBONATE COPOLYMER

POLYCARBONATCOPOLYMER

COPOLYMÈRE DE POLYCARBONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2017 JP 2017013044**

(43) Date of publication of application:
**04.12.2019 Bulletin 2019/49**

(73) Proprietor: **Teijin Limited**
**Osaka-shi, Osaka 530-0005 (JP)**

(72) Inventors:
- **TSUNEMORI, Hideyuki**
**Osaka-shi**
**Osaka 530-0005 (JP)**
- **YAMANAKA, Katsuhiro**
**Osaka-shi**
**Osaka 530-0005 (JP)**

(74) Representative: **Adam, Holger**
**Kraus & Weisert**
**Patentanwälte PartGmbB**
**Thomas-Wimmer-Ring 15**
**80539 München (DE)**

(56) References cited:
**JP-A- H0 841 189**
**JP-A- H08 234 457**
**JP-A- 2000 178 430**
**JP-A- 2005 075 858**
**JP-A- 2005 272 693**
**JP-A- 2016 141 722**
**JP-A- 2016 141 722**
**US-A- 4 605 726**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 575 340 B1

## Description

FIELD

The present invention relates to a polycarbonate resin (polycarbonate copolymer) capable of inhibiting polymer degradation under conditions of being exposed to a basic environment containing an amine. In addition, the present invention relates to a polycarbonate resin molded article (such as a sheet or film) exhibiting superior amine resistance preferable for the production of automotive interior parts. Moreover, the present invention relates to an automotive interior part exhibiting superior scratch resistance, impact resistance, heat resistance and amine resistance that is composed of a polycarbonate resin having a specific structural unit.

BACKGROUND

Polyurethane foam is produced using a polyol and polyisocyanate for the main raw materials thereof and is obtained by mixing in a foaming agent, foam stabilizer, catalyst or colorant and the like followed by foaming while resinifying. Polyurethane foam is widely used particularly in the automotive field in seat cushions, door trim, head rests, arm rests, steering wheel, floor and ceiling sound-absorbing and damping materials, cushioning materials and sun visors. Tertiary amine compounds used as catalysts are essential substances in the polyurethane foam resinification and foaming/expansion reactions. However, amine catalysts are known to gradually volatilize from the polyurethane foam following production and cause discoloration or whitening of other interior parts.

In addition, the use of non-coated interior parts is being examined in the automotive field for the purpose of reducing the burden on the environment and improving production efficiency, and non-coated materials not requiring coating treatment for the purpose of surface protection are being required. Thus, such non-coated materials are required to demonstrate resistance to amines.

Polycarbonate resins are known that have bisphenol A as a constituent unit thereof. These polycarbonate resins have superior transparency, impact resistance, heat resistance and dimensional stability. Consequently, they are used as engineering plastics in a wide range of fields such as casings for electrical and electronic equipment, automotive interior and exterior parts, construction materials, furniture, musical instruments and miscellaneous goods. Moreover, since they can be made to be lightweight as a result of having a lower specific gravity in comparison with inorganic glass resulting in superior productivity, these materials are used in window applications such as automobile windows.

Moreover, sheets and films using polycarbonate resins are widely used as various types of display devices or protective parts of automotive interiors as a result of undergoing additional secondary processing such as coating treatment, lamination or surface modification.

However, polycarbonate resins that have not undergone coating treatment undergo polymer degradation when exposed to a basic environment containing an amine, thereby resulting in the problem of whitening of the surface of molded articles. Moreover, the pencil hardness of polycarbonate resin as measured in compliance with Part 5: Mechanical property of film, Section 4: Scratch hardness (Pencil method) of the Testing Methods for Paints described in JIS K5600-5-4 is only about 2B, resulting in the problem of increased susceptibility to scratching of the surface when used as a non-coated material.

Therefore, copolymerized polycarbonate resins demonstrating high surface hardness have been proposed (see, for example, Patent Document 1). However, although these copolymerized polycarbonate resins have high surface hardness and superior ammonia resistance, they have the problem of inferior impact resistance.

In addition, polycarbonates and copolycarbonates are known that have 2,2-bis(4-hydroxy-3-methylphenyl)propane as a constituent unit thereof (see, for example, Patent Documents 2 to 6). Although these polycarbonate resins have superior surface hardness, they have the problem of inferior heat resistance in comparison with polycarbonate resins having bisphenol A as a constituent unit thereof.

Moreover, polycarbonates and copolycarbonates are known that have 6,6'-dihydroxy-3,3,3',3'-tetramethyl-1,1'-spirobiindane as a constituent unit thereof (see, for example, Patent Documents 7 and 8). Although these polycarbonate resins have superior surface hardness and heat resistance, since they are resin compositions with polycarbonate resins having bisphenol A as a constituent unit thereof, amine resistance is inferior.

Thus, there is yet to exist a polycarbonate resin that demonstrates superior scratch resistance, impact resistance, heat resistance and amine resistance.

[CITATION LIST]

[PATENT DOCUMENT]

Patent Document 1: JP2009-500195A

Patent Document 2: JPS64-069625A

Patent Document 3: JPH08-183852A

Patent Document 4: JPH 08-034846A

Patent Document 5: JP2002-117580A

Patent Document 6: JP 2003-252978A

Patent Document 7: JP 2016-141721A

Patent Document 8: JP 2016-141722A

SUMMARY

[TECHNICAL PROBLEM]

An object of the present invention is to provide a polycarbonate resin having superior scratch resistance, impact resistance, heat resistance and amine resistance. In addition, an object of the present invention is to provide a polycarbonate resin molded article preferable for automotive interior parts.

[SOLUTION TO PROBLEM]

The inventors of the present invention surprisingly found that the aforementioned objects can be achieved even with a polycarbonate resin that contains a specific constituent unit. Further studies were conducted based on this finding thereby leading to completion of the present invention.

Namely, the following Configurations 1 to 15 are provided by the present invention.

(Configuration 1) A polycarbonate copolymer composed of a main component unit consisting of:

(A) a constituent unit (A) represented by the following formula (1):

[Chem. 1]

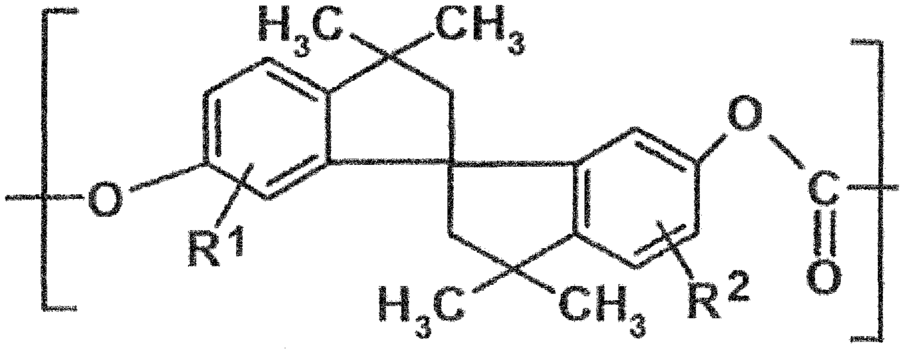

(1)

wherein, $R^1$ and $R^2$ respectively and independently represent a hydrogen atom, hydrocarbon group having 1 to 9 carbon atoms that may contain an aromatic group, or halogen atom),
(B) a constituent unit (B) represented by the following formula (2):

[Chem. 2]

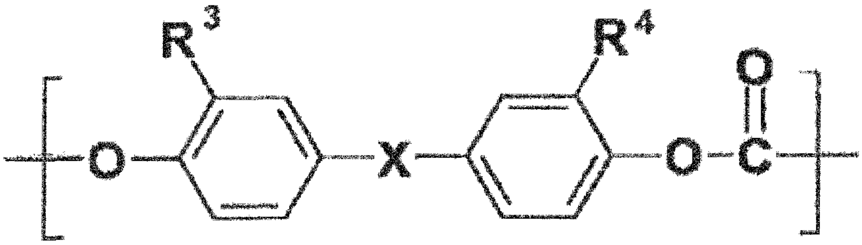

(2)

wherein, $R^3$ and $R^4$ respectively and independently represent an alkyl group having 1 to 6 carbon atoms or a halogen atom, X represents a single bond, substituted or unsubstituted alkylene group, substituted or unsubstituted alkanediyl group, sulfur atom or oxygen atom, and

(C) a constituent unit (C) represented by the following formula (3):

[Chem. 3]

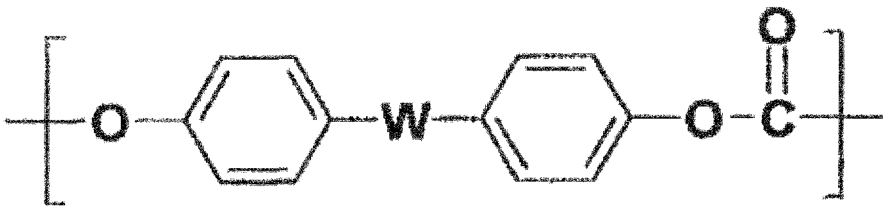

(3)

wherein, W represents a single bond, substituted or unsubstituted alkylene group, substituted or unsubstituted alkanediyl group, sulfur atom or oxygen atom; and, the proportion of constituent unit (A) among all constituent units is 5 mol% to 25 mol%, the proportion of constituent unit (B) is 35 mol% to 60 mol%, and the proportion of constituent unit (C) is 30 mol% to 50 mol%.

(Configuration 2) The polycarbonate copolymer described in Configuration 1 above, wherein $R^1$ and $R^2$ in formula (1) respectively and independently represent a hydrogen atom or alkyl group having 1 to 6 carbon atoms, $R^3$ and $R^4$ in formula (2) respectively and independently represent an alkyl group having 1 to 6 carbon atoms, X represents a single bond, substituted or unsubstituted alkylene group having 1 to 10 carbon atoms, or substituted or unsubstituted alkanediyl group having 1 to 10 carbon atoms, and W in formula (3) represents a single bond, substituted or unsubstituted alkylene group having 1 to 10 carbon atoms, or substituted or unsubstituted alkanediyl group having 1 to 10 carbon atoms.

(Configuration 3) The polycarbonate copolymer described in Configuration 1 or 2 above, wherein the glass transition temperature thereof is 140°C to 160°C.

(Configuration 4) The polycarbonate copolymer described in any of Configurations 1 to 3 above, wherein Rockwell hardness as measured with a Rockwell hardness tester (M scale) in compliance with JIS K7202-2 is 95 to 120.

(Configuration 5) The polycarbonate copolymer described in any of Configurations 1 to 4 above, wherein impact energy in a high-speed surface impact test as measured in compliance with JIS K7211-2 is 25 J or more and the fracture morphology is that of a ductile fracture.

(Configuration 6) The polycarbonate copolymer described in any of Configurations 1 to 5 above, wherein viscosity-average molecular weight is 15,000 to 40,000.

(Configuration 7) The polycarbonate copolymer described in any of Configurations I to 6 above, wherein constituent unit (A) is a constituent unit derived from 6,6'-dihydroxy-3,3,3',3'-tetramethyl-1,1'-spirobiindane.

(Configuration 8) The polycarbonate copolymer described in any of Configurations I to 7 above, wherein constituent unit (B) is a constituent unit derived from 2,2-bis(4-hydroxy-3-methylphenyl)propane.

(Configuration 9) The polycarbonate copolymer described in any of Configurations 1 to 8 above, wherein constituent unit (C) is a constituent unit derived from 2,2-bis(4-hydroxyphenyl)propane.

(Configuration 10) A resin composition containing the polycarbonate copolymer described in any of Configurations 1 to 9 above and a mold release agent.

(Configuration 11) A resin composition containing the polycarbonate copolymer described in any of Configurations 1 to 9 above, a phosphorous-based stabilizer and/or a hindered phenol-based stabilizer.

(Configuration 12) A resin composition containing the polycarbonate copolymer described in any of Configurations 1 to 9 above and an ultraviolet absorber.

(Configuration 13) A molded article obtained by injection molding the polycarbonate copolymer described in any of Configurations 1 to 9 above.

(Configuration 14) A sheet or film obtained by extrusion molding the polycarbonate copolymer described in any of Configurations 1 to 9 above.

(Configuration 15) An automotive interior part using the molded article of Configuration 13 above or the sheet or film of Configuration 14 above.

[ADVANTAGEOUS EFFECTS OF INVENTION]

The polycarbonate resin of the present invention and molded article composed thereof are preferably used in automotive interior parts due to their superior amine resistance, scratch resistance, heat resistance and impact resistance. Thus, the industrial effect demonstrated thereby is extraordinary.

DESCRIPTION OF EMBODIMENTS

The following provides an explanation of details of the present invention.

<Polycarbonate Resin (Polycarbonate Copolymer)>

The polycarbonate resin of the present invention is composed of a main component unit consisting of:

(A) a constituent unit (A) represented by the following formula (1):

[Chem. 4]

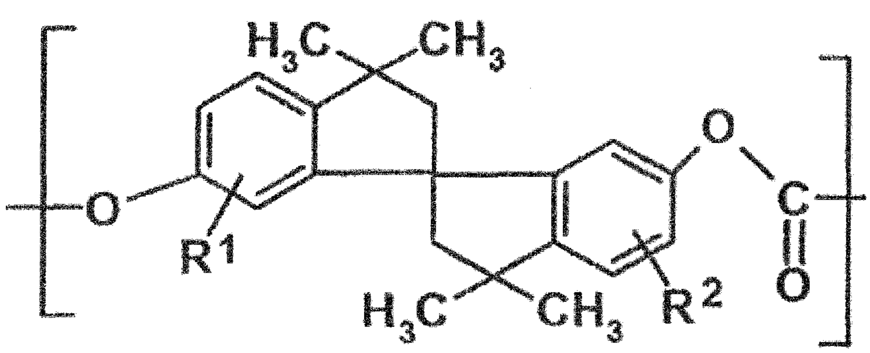

(1)

wherein, $R^1$ and $R^2$ respectively and independently represent a hydrogen atom, hydrocarbon group having 1 to 9 carbon atoms that may contain an aromatic group, or halogen atom,

(B) a constituent unit (B) represented by the following formula (2):

[Chem. 5]

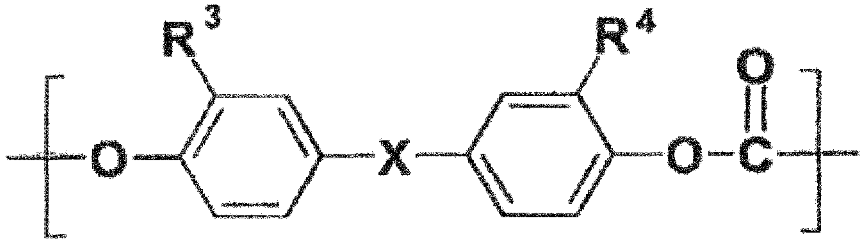

(2)

(wherein, $R^3$ and $R^4$ respectively and independently represent an alkyl group having 1 to 6 carbon atoms or a halogen atom, X represents a single bond, substituted or unsubstituted alkylene group, substituted or unsubstituted

alkanediyl group, sulfur atom or oxygen atom), and

(C) a constituent unit (C) represented by the following formula (3):

[Chem. 6]

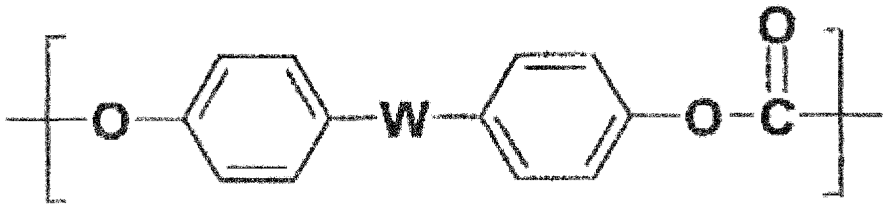

(3)

wherein, W represents a single bond, substituted or unsubstituted alkylene group, substituted or unsubstituted alkanediyl group, sulfur atom or oxygen atom.

Here, the term "main" refers to a proportion of a constituent unit equal to 70 mol% or more, preferably 80 mol% or more, more preferably 90 mol% or more, even more preferably 95 mol% or more and most preferably 100 mol% based on 100 mol% of all carbonate constituent units excluding the ends.

In constituent unit (A) represented by the aforementioned formula (1), $R^1$ and $R^2$ preferably respectively and independently represent a hydrogen atom or alkyl group having 1 to 6 carbon atoms, and more preferably represent a hydrogen atom.

Examples of divalent phenols from which constituent unit (A) is derived include 6,6'-dihydroxy-3,3,3',3'-tetramethyl-1,1'-spirobiindane, 7,7'-dimethyl-6,6'-dihydroxy-3,3,3',3'-tetramethyl-1,1'-spirobiindane, and 7,7'-diphenyl-6,6'-dihydroxy-3,3,3',3'-tetramethyl-1,1'-spirobiindane. The most preferable divalent phenol is 6,6'-dihydroxy-3,3,3',3'-tetramethyl-1,1'-spirobiindane.

The proportion of constituent unit (A) among all constituent units in the polycarbonate resin of the present invention is 5 mol% to 25 mol%. Although heat resistance improves if the proportion of constituent unit (A) exceeds 25 mol%, moldability becomes inferior, thereby making this undesirable. If the proportion of constituent unit (A) is less than 5 mol%, heat resistance and scratch resistance are inferior, thereby making this undesirable.

$R^3$ and $R^4$ in constituent unit (B) represented by the aforementioned formula (2) preferably respectively and independently represent an alkyl group having 1 to 6 carbon atoms and more preferably represent an alkyl group having 1 to 4 carbon atoms.

In addition, X preferably represents a single bond, substituted or unsubstituted alkylene group having 1 to 10 carbon atoms or substituted or unsubstituted alkanediyl group having 1 to 10 carbon atoms, more preferably represents a single bond, unsubstituted alkylene group having 1 to 5 carbon atoms or unsubstituted alkanediyl group having 1 to 5 carbon atoms, and even more preferably represents an unsubstituted alkanediyl group having 1 to 5 carbon atoms. A propane-2,2-diyl group is preferable for the alkanediyl group.

Examples of divalent phenol groups from which constituent unit (B) is derived include 2,2-bis(4-hydroxy-3-methylphenyl)propane (which may also be described as bisphenol C), 2,2-bis(4-hydroxy-3-isopropylphenyl)propane and 2,2-bis(3-t-butyl-4-hydroxyphenyl)propane. The most preferable divalent phenol is bisphenol C.

The proportion of constituent unit (B) among all constituent units in the polycarbonate resin of the present invention is 35 mol% to 60 mol% and preferably 40 mol% to 55 mol%. If the proportion of constituent unit (B) exceeds 60 mol%, impact resistance and heat resistance are inferior, thereby making this undesirable. If the proportion of constituent unit (B) is less than 35 mol%, amine resistance and scratch resistance are inferior, thereby making this undesirable.

In constituent unit (C) represented by the aforementioned formula (3), W preferably represents a single bond, substituted or unsubstituted alkylene group having 1 to 10 carbon atoms, or substituted or unsubstituted alkanediyl group having 1 to 10 carbon atoms, more preferably represents a single bond, unsubstituted alkylene group having 1 to 5 carbon atoms or unsubstituted alkanediyl group having 1 to 5 carbon atoms, and even more preferably represents an unsubstituted alkanediyl group having 1 to 5 carbon atoms. A propane-2,2-diyl group is preferable for the alkanediyl group.

Examples of divalent phenols from which constituent (C) is derived include 2,2-bis(4-hydroxyphenyl)propane (which may also be described as bisphenol A), 4,4'-dihydroxy-1,1-biphenyl, 4,4'-dihydroxydiphenyl ether, 4,4'-dihydroxydiphenyl thioether, 4,4'-dihydroxydiphenylsulfone, 4,4'-dihydroxydiphenylsulfoxide, 4,4'-dihydroxydiphenylsulfide, 1,1-bis(4-hydroxyphenyl)methane, 1,1-bis(4-hydroxyphienyl)ethane, 2,2-bis(4-hydroxyphenyl)butane, 2,2-bis(4-hydroxyphenyl)pentane, 4,4-bis(4-hydroxyphenyl)heptane, 2,2-bis(4-hydroxyphenyl)octane and 1,1-bis(4-hydroxyphenyl)decane. The most preferable divalent phenol is bisphenol A.

The proportion of constituent unit (C) among all constituent units in the polycarbonate resin of the present invention is 30 mol% to 50 mol%, preferably 35 mol% to 45 mol%, and more preferably 40 mol% to 45 mol%. If the proportion of constituent unit (C) exceeds 50 mol%, scratch resistance and amine resistance are inferior, thereby making this undesirable. If the proportion of constituent unit (C) is less than 30 mol%, impact resistance is inferior, thereby making this undesirable.

Moreover, examples of divalent phenols from which constituent units other than constituent units (A), (B) and (C) are derived preferably include 2,6-dihydroxynaphthalene, hydroquinone, resorcinol, resorcinol substituted with an alkyl group having 1 to 3 carbon atoms, 3-(4-hydroxphenyl)-1,1,3-trimethylindan-5-ol, 1-(4-hydroxyphenyl)-1,3,3-trimethylindan-5-ol, 1-methyl-1,3-bis(4-hydroxyphenyl)-3-isopropyl cyclohexane, 1-methyl-2-(4-hydroxyphenyl)-3-[1-(4-hydroxyphenyl)isopropyl] cyclohexane, and 1,6-bis(4-hydroxyphenyl)-1,6-hexanedione. Other details regarding these polycarbonates are described in, for example, WO03/080728A, JPH6-172508A, JPH8-27370A, JP2001-55435A and JP2002-117580A.

The polycarbonate resin of the present invention is obtained by reacting a divalent phenol and a carbonate precursor. Examples of the reaction method include interfacial polycondensation, melt transesterification, carbonate prepolymer solid-phase transesterification, and cyclic carbonate compound ring-opening polymerization. A monovalent phenol terminating agent is normally used in the case of interfacial polycondensation. In addition, the polycarbonate resin may be a branched polycarbonate obtained by polymerizing a trifunctional component or a copolycarbonate obtained by copolymerizing an aliphatic dicarboxylic acid or aromatic dicarboxylic acid and vinyl-based monomer.

In a reaction using phosgene, for example, as a carbonate precursor, the reaction is normally carried out in the presence of an acid-binding agent and solvent. Examples of acid-binding agents used include alkaline metal hydroxides such as sodium hydroxide or potassium hydroxide, and amine compounds such as pyridine. Examples of solvent used include halogenated hydrocarbons such as methylene chloride or chlorobenzene. In addition, a catalyst such as a tertiary amine or quaternary ammonium salt can be used to accelerate the reaction. At that time, the reaction temperature is normally 0°C to 40°C and the reaction time is several minutes to 5 hours.

A transesterification reaction using, for example, a carbonic acid diester as a carbonate precursor is carried out by a method consisting of stirring a prescribed proportion of an aromatic dihydroxy component while heating with the carbonic acid diester in an inert gas atmosphere followed by distilling off the resulting alcohol or phenol. Although the reaction temperature varies according to the boiling point of the alcohol or phenol formed, it is normally within the range of 120°C to 300°C. The reaction is completed while distilling off alcohol or phenol formed by reducing pressure from the early stages thereof. In addition, a catalyst normally used in transesterification reactions can be used to accelerate the reaction.

Examples of carbonic acid diesters used in the aforementioned transesterification reaction include diphenyl carbonate, dinaphthyl carbonate, bis(diphenyl) carbonate, dimethyl carbonate, diethyl carbonate and dibutyl carbonate. Among these, diphenyl carbonate is particularly preferable.

A routinely used monofunctional phenol can be used for the terminating agent. In the case of a reaction using phosgene for the carbonate precursor in particular, a monofunctional phenol is typically used as a terminating agent in order to adjust molecular weight. In addition, since the ends of the resulting polycarbonate resin are blocked by a group based on the monofunctional phenol, thermal stability is superior in comparison with those in which the ends are not blocked in this manner.

Specific examples of the aforementioned monofunctional phenols include phenol, m-methylphenol, p-methylphenol, m-propylphenol, p-propylphenol, 1-phenylphenol, 2-phenylphenol, p-tert-butylphenol, p-cumylphenol, isooctylphenol and p-long chain alkyl phenols.

The polycarbonate resin of the present invention is able to copolymerize an aliphatic diol as necessary. Examples of aliphatic diols include isosorbide:1,4:3,6-dianhydro-D-sorbitol, tricyclodecane dimethanol, 4,8-bis(hydroxymethyl)tricyclodecane, cis/trans-2,2,4,4-tetramethylcyclobutane-1,3-diol, cis/trans-1,4-cyclohexane dimethanol, cis/trans-1,4-bis(hydroxymethyl)cyclohexane, cyclohex-1,4-ylene dimethanol, trans-1,4-cyclohexane dimethanol, trans-1,4-bis(hydroxymethyl)cyclohexane, cis-1,4-cyclohexane dimethanol, cis-1,4-bis(hydroxymethyl)cyclohexane, cis-1,2-cyclohexane dimethanol, 1,1'-bi(cyclohexyl)-4,4'-diol, spiroglycol, dicyclohexyl-4,4'-diol, 4,4'-dihydroxybicyclohexyl and poly(ethylene glycol).

The polycarbonate resin of the present invention is able to copolymerize a fatty acid as necessary. Examples of fatty acids include 1,10-dodecanedioic acid, adipic acid, hexanedioic acid, isophthalic acid, 1,3-benzenedicarboxylic acid, terephthalic acid, 1,4-benzenedicarboxylic acid, 2,6-naphthalenedicarboxylic acid, 3-hydroxybenzoic acid and 4-hydroxybenzoic acid.

The polycarbonate resin of the present invention includes a polyester carbonate obtained by copolymerizing an aromatic or aliphatic (including alicyclic) bifunctional carboxylic acid. The aliphatic bifunctional carboxylic acid is preferably an $\alpha,\omega$-dicarboxylic acid. Examples of aliphatic bifunctional carboxylic acids include linear saturated aliphatic dicarboxylic acids such as sebacic acid (decanoic diacid), dodecanoic diacid, tetradecanoic diacid, octadecanoic diacid or icosanoic diacid, and alicyclic dicarboxylic acids such as cyclohexane dicarboxylic acid. These carboxylic acids may

be copolymerized within a range that does not impair the object thereof. The polycarbonate resin of the present invention is able to copolymerize a constituent unit containing a polyorganosiloxane unit as necessary.

The polycarbonate resin of the present invention can also be in the form of a branched polycarbonate by copolymerizing a constituent unit containing a polyfunctional aromatic compound that is at least trifunctional or higher as necessary. Examples of trifunctional or higher polyfunctional aromatic compounds preferably used in branched polycarbonates include trisphenols such as 4,6-dimethyl-2,4,6-tris(4-hydroxydiphenyl)heptene-2,2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methyphenol or 4-{4-[1,1-bis(4-hydroxyphenyl)ethyl]benzene}-$\alpha,\alpha$-dimethylbenzylphenol. Among these, 1,1,1-tris(4-hydroxyphenyl)ethane is preferable. The proportion of constituent unit derived from these polyfunctional aromatic compounds in a total of 100 mol% with constituent units derived from other divalent components is preferably 0.03 mol% to 1.5 mol%, more preferably 0.1 mol% to 1.2 mol% and particularly preferably 0.2 mol% to 1.0 mol%.

In addition, a branched structural unit may not only be derived from a polyfunctional aromatic compound, but also may be derived without using a polyfunctional aromatic compound in the manner of a side reaction that occurs during a polymerization reaction by melt transesterification. Furthermore, the proportion of this branched structure can be calculated by $^1$H-NMR measurement.

The viscosity-average molecular weight (Mv) of the polycarbonate resin of the present invention is preferably 15,000 to 40,000, more preferably 16,000 to 35,000 and even more preferably 18,000 to 30,000. In the case of a polycarbonate resin in which the viscosity-average molecular weight is less than 15,000, practically adequate tenacity and cracking resistance (impact resistance) may be unable to be obtained. On the other hand, a polycarbonate resin in which viscosity-average molecular weight exceeds 40,000 either requires a high molding processing temperature or requires a special molding method, thereby resulting in inferior versatility, and since dependence on injection speed becomes high due to an increase in melt viscosity, sometimes yield decreases due to poor appearance and the like.

The viscosity-average molecular weight of the polycarbonate resin in the present invention is calculated by first determining specific viscosity ($\eta_{sp}$) calculated with the following equation using an Ostwald viscometer from a solution obtained by dissolving 0.7 g of polycarbonate resin in 100 ml of methylene chloride at 20°C:

$$\text{specific viscosity } (\eta_{sp}) = (t - t_0)/t_0$$

(wherein, to is the falling number in seconds of the methylene chloride and t is the falling number in seconds of the sample solution), followed by calculating viscosity-average molecular weight (Mv) according to the following equation from the determined specific viscosity ($\eta_{sp}$):

$$\eta_{sp}/c = [\eta] + 0.45 \times [\eta]^2 c$$

(wherein, [$\eta$] represents intrinsic viscosity)

$$[\eta] = 1.23 \times 10^{-4}\ Mv^{0.83}$$

$$c = 0.7.$$

<Resin Composition>

The polycarbonate resin (polycarbonate copolymer) of the present invention can be in the form of a resin composition containing functional agents known per se such as a mold release agent, heat stabilizer, ultraviolet absorber, flow modifier or antistatic agent within a range that does not impair the effects of the present invention.

(i) Mold Release Agent

The polycarbonate resin of the present invention may combine the use of a mold release agent within a range that does not impair the effects of the present invention. Examples of mold release agents include fatty acid esters, polyolefin-based waxes (such as polyethylene wax or 1-alkene polymers and those that are modified with a functional group-containing compound such as acid modification can also be used), fluorine compounds (such as fluorine oils as

represented by polyfluoroalkyl ethers), paraffin wax and beeswax. Among these, fatty acid esters are preferable from the viewpoints of availability, releasability and transparency.

The proportion at which the mold release agent is contained based on 100 parts by weight of the polycarbonate resin is preferably 0.005 parts by weight to 0.5 parts by weight, more preferably 0.007 parts by weight to 0.4 parts by weight, and even more preferably 0.01 parts by weight to 0.3 parts by weight. If the content is equal to or greater than the lower limit of the aforementioned ranges, the effect of improving releasability is clearly demonstrated, and in the case of being equal to or less than the upper limit, detrimental effects such as soiling of the mold during molding are reduced, thereby making this preferable.

The following provides a detailed explanation of fatty acid esters used as preferable mold release agents among the aforementioned mold release agents. These fatty acid esters are esters of an aliphatic alcohol and aliphatic carboxylic acid. The aliphatic alcohol may be a monovalent alcohol or a polyvalent alcohol having a valence of 2 or more. In addition, the number of carbon atoms of the alcohol is preferably within the range of 3 to 32 and more preferably within the range of 5 to 30. Examples of monovalent alcohols include dodecanol, tetradecanol, hexadecanol, octadecanol, eicosanol, tetracosanol, ceryl alcohol and triacontanol. Examples of polyvalent alcohols include pentaerythritol, dipentaerythritol, tripentaerythritol, polyglycerols (including triglycerol to hexaglycerol), ditrimethylolpropane, xylitol, sorbitol and mannitol. A polyvalent alcohol is more preferable for the fatty acid ester.

On the other hand, the aliphatic carboxylic acid is an aliphatic carboxylic acid preferably having 3 to 32 carbons and particularly preferably 10 to 22 carbon atoms. Examples of these aliphatic carboxylic acids include saturated aliphatic carboxylic acids such as decanoic acid, undecanoic acid, dodecanoic acid, tridecanoic acid, tetradecanoic acid, pentadecanoic acid, hexadecanoic acid (palmitic acid), heptadecanoic acid, octadecanoic acid (stearic acid), nonadecanoic acid, icosanoic acid or docosanoic acid (behenic acid). In addition, other examples include unsaturated aliphatic carboxylic acids such as palmitoleic acid, oleic acid, linoleic acid, linolenic acid, eicosenoic acid, eicosapentaenoic acid and cetoleic acid.

Among the aforementioned aliphatic carboxylic acids, those having 14 to 20 carbon atoms are preferable. Saturated aliphatic carboxylic acids are particularly preferable. Since these aliphatic carboxylic acids are normally produced from natural oils and fats such as animal fat (such as beef tallow or pork fat) or plant oil (such as palm oil), these aliphatic carboxylic acids are normally mixtures containing carboxylic acid components having different numbers of carbon atoms. Thus, aliphatic carboxylic acids are produced from these natural fats and oils even in the production thereof and are composed in the form of a mixture containing other carboxylic acid components. The acid number of the aliphatic ester is preferably 20 or less (and can substantially be zero). However, in the case of a full ester, a free fatty acid is preferably at least contained in order to improve releasability, and with respect to this point, the acid number of a full ester is preferably within the range of 3 to 15. In addition, the iodine number of the fatty acid ester is preferably 10 or less (and can substantially be zero). These properties can be determined according to the method defined in JIS K 0070.

The aforementioned fatty acid ester may be a partial ester or full ester. A partial ester is preferable and a glycerin monoester is particularly preferable from the viewpoints of better releasability and durability. Glycerin and a fatty acid monoester constitute the main components of a glycerin monoester. Preferable examples of fatty acids include saturated fatty acids such as stearic acid, palmitic acid, behenic acid, arachic acid, montanic acid or lauric acid, and unsaturated fatty acids such as oleic acid, linoleic acid or sorbic acid. In particular, the fatty acid ester preferably has as main components thereof glycerin monoesters of stearic acid, behenic acid and palmitic acid.

Furthermore, these fatty acids are synthesized from naturally-occurring fatty acids and are mixtures as previously described. In such cases as well, the proportion of glycerin monoester in the fatty acid ester is preferably 60% by weight or more.

Furthermore, there are many cases in which partial esters are inferior to full esters from the viewpoint of heat stability. The partial ester has a sodium metal content of preferably less than 20 ppm, more preferably less than 5 ppm and even more preferably less than 1 ppm in order to improve heat stability of the partial ester. Fatty acid partial esters having a sodium metal content of less than 1 ppm can be produced by purifying by molecular distillation and the like after having produced the fatty acid partial ester by an ordinary method.

More specifically, a method can be employed in which, after removing gaseous components and low boiling point substances with a spray nozzle-type degassing device, glycerin and other polyvalent alcohol components are removed using a falling film distillation device under conditions of a distillation temperature of 120°C to 150°C and degree of vacuum of 0.01 kPa to 0.03 kPa. Moreover, a highly pure fatty acid partial ester is then obtained as a distillate using a centrifugal molecular distillation device under conditions of a distillation temperature of 160°C to 230°C and degree of vacuum of 0.01 Torr to 0.2 Torr. Sodium metal can be removed as distillation residue.

Purity can be further enhanced by repeatedly carrying out molecular distillation on the resulting distillate, thereby allowing the obtaining of a fatty acid partial ester having an even lower sodium metal content. In addition, it is critical to adequately wash the inside of the molecular distillation device in advance using a suitable method as well as prevent contamination by sodium metal components from the external environment such as by enhancing airtightness. These

fatty acid esters can also be acquired from specialized manufacturers (such as Riken Vitamin Co., Ltd.).

(ii) Phosphorous-based Stabilizer

The polycarbonate resin of the present invention preferably further incorporates various types of phosphorous-based stabilizers for the main purpose of improving heat stability during molding processing thereof. Examples of these phosphorous-based stabilizers include phosphorous acid, phosphoric acid, phosphonous acid, phosphonic acid and esters thereof. These phosphorous-based stabilizers further include tertiary phosphines.

More specifically, examples of phosphite compounds include triphenyl phosphite, tris(nonylphenyl) phosphite, tridecyl phosphite, trioctyl phosphite, trioctadecyl phosphite, didecyl monophenyl phosphite, dioctyl monophenyl phosphite, diisopropyl monophenyl phosphite, monobutyl diphenyl phosphite, monodecyl diphenyl phosphite, monooctyl diphenyl phosphite, 2,2-methylenebis(4,6-di-tert-butylphenyl)octyl phosphite, tris(diethylphenyl) phosphite, tris(di-isopropylphenyl) phosphite, tris(di-n-butylphenyl) phosphite, tris(2,4-di-tert-butylphenyl) phosphite, tris(2,6-di-tert-butylphenyl) phosphite, distearyl pentaerythritol diphosphite, bis(2,4,-di-tert-butylphenyl) pentaerythritol diphosphite, bis(2,6-di-tert-butyl-4-methylphenyl) pentaerythritol diphosphite, bis(2,6-di-tert-butyl-4-ethylphenyl) pentaerythritol diphosphite, phenyl bisphenol A pentaerythritol diphosphite, bis(nonylphenyl) pentaerythritol diphosphite and dicyclohexyl pentaerythritol diphosphite.

Still other phosphite compounds that can be used are those having a cyclic structure obtained by reacting with a divalent phenol. Examples thereof include 2,2'-methylenebis(4,6-di-tert-butylphenyl) (2,4-di-tert-butylphenyl) phosphite, 2,2'-methylenebis(4,6-di-tert-butylphenyl) (2-tert-butyl-4-methylphenyl) phosphite, 2,2'-methylenebis(4-methyl-6-tert-butylphenyl) (2-tert-butyl-4-methylphenyl) phosphite, and 2,2'-ethylidenebis(4-methyl-6-tert-butylphenyl) (2-tert-butyl-4-methylphenyl) phosphite.

Examples of phosphate compounds include tributyl phosphate, trimethyl phosphate, tricresyl phosphate, triphenyl phosphate, trichlorophenyl phosphate, triethyl phosphate, diphenyl cresyl phosphate, diphenyl mono-ortho-xenyl phosphate, tributoxyethyl phosphate, dibutyl phosphate, dioctyl phosphate and diisopropyl phosphate. Triphenyl phosphate and trimethyl phosphate are preferable.

Examples of phosphonite compounds include tetrakis(2,4-di-tert-butylphenyl-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenyl phosphonite, bis(2,4-di-tert-butylphenyl)-3-phenyl-phenyl phosphonite, bis(2,6-di-n-butylphenyl)-3-phenyl-phenyl phosphonite, bis(2,6-di-tert-butylphenyl)-4-phenyl-phenyl phosphonite and bis(2,6-di-tert-butylphenyl)-3-phenyl-phenyl phosphonite.

Among these, tetrakis(di-tert-butylphenyl)-biphenylene diphosphonite and bis(di-tert-butylphenyl)-phenyl-phenyl phosphonite are preferable. Tetrakis(2,4-di-tert-butylphenyl)-biphenylene diphosphonite and bis(2,4-di-tert-butylphenyl)-phenyl-phenyl phosphonite are more preferable. These phosphonite compounds can be preferably used in combination with the aforementioned phosphite compounds having an aryl group substituted with two or more alkyl groups.

Examples of phosphonate compounds include dimethyl benzene phosphonate, diethyl benzene phosphonate and dipropyl benzene phosphonate.

Examples of tertiary phosphines include triethylphosphine, tripropylphosphine, tributylphosphine, trioctylphosphine, triamylphosphine, dimethylphenylphosphine, dibutylphenylphosphine, diphenylmethylphosphine, diphenyloctylphosphine, triphenylphosphine, tri-p-tolylphosphine, trinaphthylphosphine and diphenylbenzylphosphine. The tertiary phosphine is particularly preferably triphenylphosphine.

Not only one type, but also two or more types of the aforementioned phosphorous-based stabilizer can be used as a mixture. Among the aforementioned phosphorous-based stabilizers, phosphite compounds or phosphonite compounds are preferable. Tris(2,4-di-tert-butylphenyl) phosphite, tetrakis(2,4-di-tert-butylphenyl)-4,4'-biphenylene diphosphonite and bis(2,4-di-tert-butylphenyl)-phenyl-phenyl phosphonite are particularly preferable. In addition, a preferable aspect consists of using these in combination with a phosphate compound.

(iii) Hindered Phenol-based Stabilizer

The polycarbonate resin of the present invention can incorporate a hindered phenol-based stabilizer for the main purpose of improving heat stability and heat aging resistance during molding processing thereof.

Examples of this hindered phenol-based stabilizer include $\alpha$-tocopherol, butylhydroxytoluene, sinapyl alcohol, vitamin E, n-octadecyl-$\beta$-(4'-hydroxy-3',5'-di-tert-butylphenyl) propionate, 2-tert-butyl-6-(3'-tert-butyl-5'-methyl-2'-hydroxybenzyl)-4-methylphenyl acrylate, 2,6-di-tert-butyl-4-(N,N-dimethylaminomethyl) phenol, 3,5-di-tert-butyl-4-hydroxybenzyl phosphonate diethyl ester, 2,2'-methylenebis(4-methyl-6-tert-butylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylenebis(6-α-methylbenzyl-p-cresol), 2,2'-ethylidene-bis(4,6-di-tert-butylphenol), 2,2'-butylidene-bis(4-methyl-6-tert-butylphenol), 4,4'-butylidenebis(3-methyl-6-tert-butylphenol), triethylene glycol-N-bis-3-(3-tert-butyl-4-hydroxy-5-methylphenyl) propionate, 1,6-hexandiolbis[3-(3,5-di-tert-butyl-4-hydroxyphenyl) propionate, bis[2-tert-butyl-4-methyl-6-(3-tert-butyl-5-methyl-2-hydroxybenzyl)phenyl] terephthalate, 3,9-bis{2-[3-(3-tert-butyl-4-hydroxy-5-methylphenyl)propionyloxy]-1,1-dimethylethyl}-2,4,8,10-tetraoxyspiro[5,5] undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl) sulfide, 4,4'-dithiobis(2,6-di-tert-butylphenol), 4,4'-tri-thiobis(2,6-di-tert-butylphenol), 2,2-thiodiethylenebis-[3-(3,5-di-tert-butyl-4-hydroxyphenyl)propionate], 2,4-bis(n-octylthio)-6-(4-hydroxy-3',5'-di-tert-butylanilino)-1,3,5-triazine, N,N-hexamethylenebis-(3,5-di-tert-butyl-4-hydroxyhydrocinnamide), N,N'-bis[3-(3,5-di-tert-butyl-4-hydroxyphenyl)propionyl] hydrazine, 1,1,3-tris(2-methyl-4-hydroxy-5-tert-butylphenyl) butane, 1,3,5-trimethyl-2,4,6-tris(3,5-di-tert-butyl-4-hydroxybenzyl) benzene, tris(3,5-di-tert-butyl-4-hydroxyphenyl) isocyanurate, tris(3,5-di-tert-butyl-4-hydroxybenzyl) isocyanurate, 1,3,5-tris(4-tert-butyl-3-hydroxy-2,6-dimethylbenzyl) isocyanurate, 1,3,5-tris2[3(3,5-di-tert-butyl-4-hydroxyphenyl)propionyloxy] ethyl isocyanurate and tetrakis[methylene-3-(3',5'-di-tert-butyl-4-hydroxyphenyl)propionate] methane. All of these are readily available. The aforementioned hindered phenol-based antioxidants can be used alone or two or more types can be used in combination.

The amounts of the aforementioned phosphorous-based stabilizers of (ii) and/or hindered phenol-based antioxidants of (iii) based on 100 parts by weight of polycarbonate resin are preferably 0.0001 parts by weight to 1 part by weight, more preferably 0.001 parts by weight to 0.5 parts by weight, and even more preferably 0.005 parts by weight to 0.1 parts by weight, respectively. In the case the stabilizer is below the aforementioned ranges, it is difficult to obtain favorable stabilizing effects, while in the case it exceeds the aforementioned ranges, there conversely may be a decrease in physical properties of the materials or cause mold soiling during molding.

The polycarbonate resin of the present invention can also suitably use another antioxidant other than the aforementioned hindered phenol-based antioxidants. Examples of other antioxidants include pentaerythritol tetrakis(3-mercaptopropionate), pentaerythritol tertrakis(3-laurylthiopropionate) and glycerol-3-stearylthiopropionate. The amount of these other antioxidants used based on 100 parts by weight of polycarbonate resin is preferably 0.001 parts by weight to 0.05 parts by weight.

(iv) Ultraviolet Absorber

The polycarbonate used in the present invention can contain an ultraviolet absorber. Specific examples of benzophenone-based ultraviolet absorbers include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydridelate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl) methane, 2-hydroxy-4-n-dodecyloxybenzophenone and 2-hydroxy-4-methoxy-2'-carboxybenzophenone.

Specific examples of benzotriazole-based ultraviolet absorbers include 2-(2-hydroxy-5-methylphenyl) benzotriazole, 2-(2-hydroxy-5-tert-octylphenyl) benzotriazole, 2-(2-hydroxy-3,5-dicumylphenyl)phenyl benzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol], 2-(2-hydroxy-3,5-di-tert-butylphenyl) benzotriazole, 2-(2-hydroxy-3,5-di-tert-butylphenyl)-5-chlorobenzotriazole, 2-(2-hydroxy-3,5-di-tert-amylphenyl) benzotriazole, 2-(2-hydroxy-5-tert-octylphenyl) benzotriazole, 2-(2-hydroxy-5-tert-butylphenyl) benzotriazole, 2-(2-hydroxy-4-octoxyphenyl) benzotriazole, 2,2'-methylenebis(4-cumyl-6-benzotriazolephenyl), 2,2'-p-phenylenebis(1,3-benzoxazin-4-one) and 2-[2-hydroxy-3-(3,4,5,6-tetrahydrophthalimide methyl)-5-methylphenyl] benzotriazole. In addition, other examples include copolymers having a 2-hydroxyphenyl-2H-benzotriazole backbone such as copolymers of 2-(2'-hydroxy-5-methacryloxyethylphenyl)-2H-benzotriazole and a vinyl-based monomer capable of copolymerizing with that monomer, and copolymers of 2-(2'-hydroxy-5-acryloxyethylphenyl)-2H-benzotriazole and vinyl-based monomers capable of copolymerizing with that monomer.

Specific examples of hydroxyphenyl triazine-based ultraviolet absorbers include 2-(4,6-diphenyl-1,3,5-triazin-2-yl)-5-hexyloxyphenol, 2-(4,6-diphenyl-1,3,5-triazin-2-yl)-5-methyloxyphenol, 2-(4,6-diphenyl-1,3,5-triazin-2-yl)-5-ethyloxyphenol, 2-(4,6-diphenyl-1,3,5-triazin-2-yl)-5-propyloxyphenol and 2-(4,6-diphenyl-1,3,5-triazin-2-yl)-5-butyloxyphenol.

Moreover, additional examples include compounds in which the phenyl group of the aforementioned examples of compounds is a 2,4-dimethylphenyl group such as 2-(4,6-bis(2,4-dimethylphenyl)- 1,3,5-triazin-2-yl)-5-hexyloxyphenol.

Specific examples of cyclic imino ester-based ultraviolet absorbers include 2,2'-p-phenylenebis(3,1-benzoxazin-4-one), 2,2'-(4,4'-diphenylene)bis(3,1-benzoxazin-4-one) and 2,2'-(2,6-naphthalene)bis(3,1-benzoxazin-4-one).

In addition, specific examples of cyanoacrylate-based ultraviolet absorbers include 1,3-bis-[(2'-cyano-3',3'-diphenylacryloyl)oxy]-2,2-bis[(2-cyano-3,3-diphenylacryloyl)oxy]methyl)propane and 1,3-bis-[(2-cyano-3,3-diphenylacryloyl)oxy]benzene.

Moreover, the aforementioned ultraviolet absorber may also be a polymeric ultraviolet absorber obtained by copolymerizing the ultraviolet absorbing monomer and/or a photostable monomer having a hindered amine structure with a monomer such as an alkyl (meth)acrylate by adopting the structure of a monomer compound allowing radical polymerization. Examples of the aforementioned ultraviolet absorbing monomer preferably include compounds containing a benzotriazole backbone, benzophenone backbone, triazine backbone, cyclic imino ester backbone and cyanoacrylate backbone in the ester substituent of a (meth)acrylic acid ester.

Among the aforementioned ultraviolet absorbers, benzotriazole-based ultraviolet absorbers and hydroxyphenyl triazine-based ultraviolet absorbers are preferable from the viewpoint of ultraviolet absorption capacity. Cyclic imino ester-based ultraviolet absorbers and cyanoacrylate-based ultraviolet absorbers are preferable from the viewpoints of heat resistance and hue. The aforementioned ultraviolet absorbers may be used alone or as a mixture of two or more types thereof.

The content of ultraviolet absorber based on 100 parts by weight of polycarbonate resin is 0.01 parts by weight to 2 parts by weight, preferably 0.03 parts by weight to 2 parts by weight, more preferably 0.04 parts by weight to 1 part by weight, and even more preferably 0.05 parts by weight to 0.5 parts by weight.

(v) Flow Modifier

The polycarbonate resin of the present invention can contain a flow modifier within a range that does not impair the effects of the present invention. Preferable examples of this flow modifier include styrene-based oligomers, polycarbonate oligomers (including highly branched, hyperbranched and cyclic oligomers), polyalkylene terephthalate oligomers (including highly branched, hyperbranched and cyclic oligomers), highly branched and hyperbranched aliphatic polyester oligomers, terpene resin and polycaprolactone.

The content of the flow modifier based on 100 parts by weight of polycarbonate resin is preferably 0.1 parts by weight to 30 parts by weight, more preferably 1 part by weight to 20 parts by weight and even more preferably 2 parts by weight to 15 parts by weight. Polycaprolactone is particularly preferable and the constituent proportion thereof based on 100 parts by weight of polycarbonate resin is particularly preferably 2 parts by weight to 7 parts by weight. The molecular weight of polycaprolactone in terms of number-average molecular weight is 1,000 to 70,000, preferably 1,500 to 40,000, more preferably 2,000 to 30,000 and even more preferably 2,500 to 15,000.

(vi) Antistatic Agent

The polycarbonate resin of the present invention can incorporate an antistatic agent for the main purpose of improving antistatic properties. Examples of antistatic agents that can be used include sulfonic acid phosphonium salts, phosphorous acid esters and caprolactone-based polymers, and sulfonic acid phosphonium salts are used preferably.

Specific examples of these sulfonic acid phosphonium salts include tetrabutylphosphonium dodecyl sulfonate, tetrabutylphosphonium dodecyl benzenesulfonate, tributyloctylphosphonium dodecyl benzenesulfonate, tetraoctylphosphonium dodecyl benzenesulfonate, tetraethylphosphonium octadecyl benzenesulfonate, tributylmethylphosphonium dibutyl benzenesulfonate, triphenylphosphonium dibutylnapthyl sulfonate and trioctylmethylphosphonium diisopropylnaphthyl sulfonate. Among these, tetrabutylphosphonium dodecyl benzenesulfonate is preferable from the viewpoints of compatibility with the polycarbonate and availability.

The amount of antistatic agent based on 100 parts by weight of polycarbonate resin is preferably 0.1 parts by weight to 5.0 parts by weight, more preferably 0.2 parts by weight to 3.0 parts by weight, even more preferably 0.3 parts by weight to 2.0 parts by weight and particularly preferably 0.5 parts by weight to 1.8 parts by weight. If the incorporated amount is 0.1 parts by weight or more, antistatic effects are obtained, while if the incorporated amount is 5.0 parts by weight or less, transparency and mechanical strength are superior and little likelihood of the occurrence of poor appearance caused by the formation of silver streaks and peeling on the surface of molded articles.

The polycarbonate resin of the present invention can also contain various other types of additives such as bluing agents, fluorescent dyes, flame retardants or pigments. These additives can be suitably selected and contained within a range that does not impair the effects of the present invention.

The bluing agent is preferably contained at 0.05 ppm to 3.0 ppm (weight ratio) in the polycarbonate resin. Typical examples of bluing agents include Macrolex Violet B and Macrolex Blue RR manufactured by Bayer AG and Polysynthren Blue RLS manufactured by Clariant Corp.

Examples of fluorescent dyes (including fluorescent whitening agents) include coumarin-based fluorescent dyes, benzopyran-based fluorescent dyes, perylene-based fluorescent dyes, anthraquinone-based fluorescent dyes, thioindigo-based fluorescent dyes, xanthene-based fluorescent dyes, xanthone-based fluorescent dyes, thioxanthene-based fluorescent dyes, thioxanthone-based fluorescent dyes, cyanidin-based fluorescent dyes and diaminostilbene-based fluorescent dyes. The incorporated amount of fluorescent dye (including fluorescent whitening agents) based on

100 parts by weight of polycarbonate resin is preferably 0.0001 parts by weight to 0.1 parts by weight.

Examples of flame retardants include sulfonic acid metal salt-based flame retardants, halogen-containing compound-based flame retardants, phosphorous-containing compound-based flame retardants and silicon-containing compound-based flame retardants. Among these, sulfonic acid metal salt-based flame retardants are preferable. The incorporated amount of flame retardant based on 100 parts by weight of polycarbonate resin is preferably 0.01 parts by weight to 1 part by weight and more preferably 0.05 parts by weight to 1 part by weight.

<Production of Resin Composition>

A resin composition can be produced by adding various types of additives to the polycarbonate resin (polycarbonate copolymer) of the present invention.

There are no particular limitations on the method used to incorporate additives and the like to the polycarbonate resin of the present invention and a known method can be used. An example of the most commonly used method consists of preliminary mixing the polycarbonate resin and additive followed by charging into an extruder, carrying out melt kneading, cooling the extruded thread and cutting the thread with a pelletizer to produce a pellet-shaped molded material.

Although a single screw extruder or twin screw extruder can be used for the extruder in the aforementioned method, a twin screw extruder is preferable from the viewpoints of productivity and kneadability. A typical example of this twin screw extruder is the ZSK (trade name, Werner & Pfleiderer GmBH). Specific examples of similar types of twin screw extruders include the TEX (trade name, Japan Steel Works, Ltd.), TEM (trade name, Toshiba Machine Co., Ltd.) and KTX (trade name, Kobe Steel Ltd.). An extruder having a vent capable of eliminating moisture present in the raw material along with volatile gas generated from the melt kneaded resin can be preferably used for the extruder. A vacuum pump is preferably installed for efficiently discharging generated moisture and volatile gas outside the extruder through the vent. In addition, a screen for removing foreign objects contaminating the extruded raw material can be installed in a zone in front of the extruder dicing unit to remove foreign objects from the resin composition. Examples of this screen include a wire mesh, screen changer and sintered metal plate (such as a disk filter).

Moreover, although an additive can also be independently supplied to the extruder, it is preferably preliminarily mixed with the resin raw material as previously described. Examples of means for preliminary mixing include a Nauta mixer, V-blender, Henschel mixer, mechanochemical apparatus and extrusion mixer. A more preferable method consists of, for example, mixing a portion of the raw material resin with the additive with a high-speed stirrer in the manner of a Henschel mixer to prepare a master batch followed by mixing the master batch with the entire amount of the remaining resin raw material with a low speed stirrer in the manner of a Nauta mixer.

The resin extruded from the extruder is either directly cut into pellets or formed into a strand followed by cutting the strand with a pelletizer to form pellets. It is preferable to purity the atmosphere surrounding the extruder in the case it is necessary to reduce the effects of external dust and the like.

Moreover, in the production of pellets, it is preferable to narrow the shape distribution of the pellets, further reduce miscuts, further reduce fine powder generated during shipping or transport and reduce air bubbles (vacuum bubbles) formed within the strand and pellets by using various methods already proposed for use in polycarbonate resin for optical disks.

Examples of ways to reduce miscuts include means such as managing thread temperature when cutting with the pelletizer, blowing on ionic wind during cutting, optimizing the rake angle of the pelletizer or suitably incorporating a mold release agent, and methods such as filtering the mixture of cut pellets and water to separate the pellets, water and miscuts. An example of a measurement method thereof is disclosed in JP2003-200421A. These methods can be used to increase the molding cycle and reduce the rate of appearance defects in the manner of the formation of silver streaks.

The amount of miscuts in the molding raw material (pellets) is preferably 10 ppm or less and more preferably 5 ppm or less. Here, miscuts refer to pellet bodies narrower than pellets of a desired size that pass through a JIS standard sieve having a mesh size of 1.0 mm. Although the shape of the pellets can be of an ordinary shape such as cylindrical, square columnar or spherical, a cylindrical shape (including an elliptical columnar shape) is more preferable and the diameter of that cylindrical shape is preferably 1.5 mm to 4 mm and more preferably 2 mm to 3.5 mm. The ratio of the minor axis to the major axis in the case of an elliptical columnar shape is preferably 60% or more and more preferably 65% or more. On the other hand, the length of a cylinder is preferably 2 mm to 4 mm and more preferably 2.5 mm to 3.5 mm.

<Properties of Polycarbonate Resin>

The polycarbonate resin of the present invention is able to inhibit polymer degradation in a basic environment containing an amine. As a result of conducting various studies, the depolymerization reaction of polycarbonate by an amine compound was found to consist of the amine compound acting on carbonate bonds of the polycarbonate and forming a carbamate oligomer as an intermediate as depolymerization proceeds. Therefore, in order to inhibit the reaction on carbonate bonds by the amine compound, a substituent of an aromatic ring was found to fulfill the role of steric

hindrance with respect to the carbonate bonds as a result of being composed of the constituent unit (B) represented by the aforementioned formula (2) as a main component unit thereof.

In addition, as a result of being composed of constituent unit (A) represented by the aforementioned formula (1), constituent unit (B) represented by the aforementioned formula (2) and constituent unit (C) represented by the aforementioned formula (3) in a specific ratio thereof, the polycarbonate resin of the present invention was found to demonstrate a superior balance among scratch resistance, impact resistance and heat resistance while retaining amine resistance.

The glass transition temperature of the polycarbonate resin of the present invention is preferably 140°C to 160°C, more preferably 140°C to 155°C and even more preferably 140°C to 150°C. If the glass transition temperature is 140°C or higher, the polycarbonate resin demonstrates superior heat resistance, while if the glass transition temperature is 160°C or lower, it is not necessary to raise the molding processing temperature to an excessively high temperature, thereby facilitating molding.

The Rockwell hardness of the polycarbonate resin of the present invention as measured with the M scale in compliance with JIS K7202-2 is preferably 95 or more. If the Rockwell hardness is 95 or more, scratch resistance is superior, thereby making this preferable. Furthermore, an upper limit of Rockwell hardness of 120 or less still allows the obtaining of adequate properties.

Impact energy of the polycarbonate resin of the present invention as determined in accordance with a high-speed surface impact test and as measured in compliance with JIS K7211-2 is preferably 25 J or more and more preferably 30 J or more. Moreover, fracture morphology is that of a ductile fracture. If the impact energy is 25 J or more, impact resistance is superior without the occurrence of brittle fracturing, thereby making this preferable. Adequate properties are still demonstrated at an impact energy of 50 J or less.

A molded article of the polycarbonate resin of the present invention preferably does not demonstrate a change in the appearance of a test piece after having cut soft urethane foam used for a seat cushion material to a shape measuring 50 mm long and wide and 5 mm thick, placing in a sealed glass vessel together with the molded article, and allowing to stand for 1,000 hours in a hot air dryer set to 85°C.

<Amine Compound Used to Form Polyurethane Foam>

Polyurethane resin is typically produced by reacting a polyol and polyisocyanate in the presence of a catalyst and, as necessary, a foaming agent, surfactant, flame retardants or crosslinking agent and the like. Numerous types of metal-based compounds and tertiary amine compounds are known to be used as catalysts in the production of polyurethane resin. These catalysts are widely used industrially either alone or in combination. In the production of polyurethane foam using water, a low boiling point organic compound or both as foaming agent, a tertiary amine compound in particular is widely used among these catalysts due to superior productivity and moldability.

Examples of this tertiary amine compound include conventionally known triethylenediamine, N,N,N',N'-tetramethylhexane diamine, N,N,N',N'-tetramethylpropane diamine, N,N,N',N'-tetramethylethylene diamine, bis(2-dimethylaminoethyl) ether, N,N,N',N",N"-pentamethyldiethylene triamine, N,N',N'-trimethylaminoethyl piperazine, N,N-dimethylbenzyl amine, N-methylmorpholine, N-ethylmorpholine and N,N-dimethylethanolamine.

<Polycarbonate Resin Molded Articles and Automotive Interior Parts>

There are no particular limitations on the production method used to mold a molded article from the polycarbonate resin of the present invention, and a commonly employed molding method can be arbitrarily used for the polycarbonate resin. Examples thereof include injection molding, ultra-high-speed injection molding, injection compression molding, two-color molding, gas-assist and other blow molding, molding methods using an insulated mold, molding methods using a rapid heating mold, foam molding (including supercritical fluids), insert molding, in-mold coating (IMC) molding, extrusion molding, sheet molding, thermoforming, rotational molding, laminate molding and press molding. In addition, molding methods employing a hot runner system can also be used.

In addition, the polycarbonate resin of the present invention also allows the obtaining of sheet-like or film-like molded articles by a method such as melt extrusion or solution casting (casting). A specific example of a melt extrusion method consists of supplying a certain amount of polycarbonate resin to an extruder, melting by heating, extruding the molten resin from the end of a T-die in the form of a sheet on a mirror surface roller, taking up with a plurality of rollers while cooling, and cutting to a suitable size or winding up at the point the resin has solidified. A specific example of a solution casting method consists of casting a solution obtained by dissolving the polycarbonate resin in methylene chloride (concentration: 5% to 40%) from a T-die on a stainless steel sheet polished to a mirror finish, separating the sheet while passing through an incrementally temperature-controlled oven and removing the solvent followed by cooling and winding up.

Moreover, the polycarbonate resin of the present invention can also be molded to obtain a laminate. An arbitrary

method is used for the laminate production method and this is preferably carried out by thermocompression bonding or co-extrusion. Although an arbitrary method is employed for thermocompression bonding, a method consisting of thermocompression bonding a polycarbonate resin sheet with a laminator or press machine or method in which thermocompression bonding is carried out immediately after extrusion is preferable, and a method consisting of continuously carrying out thermocompression bonding on a polycarbonate resin sheet immediately after extrusion is particularly industrially advantageous.

The polycarbonate resin of the present invention is used as an automotive interior part due to its superior heat resistance, scratch resistance, impact resistance and amine resistance. Examples of automotive interior parts include lamp lenses for interior lighting, display meter covers, meter dials, various types of switch covers, display covers, heat control panels, instrument panels, center instrument clusters, center panels, room lamp lenses, various types of display devices such as head-up displays, protective parts and translucent parts. In addition, as a result of having the aforementioned properties, the automotive interior part of the present invention offers the advantage of polycarbonate resin molded articles being able to be used as is without requiring coating treatment.

## EXAMPLES

Although the following provides a more detailed explanation of the present invention by indicating examples thereof, the present invention is not limited to these examples. The methods used to measure each of the properties in the following examples and comparative examples are as described below.

### (1) Viscosity-Average Molecular Weight

The viscosity-average molecular weight of a polycarbonate resin composition was measured and calculated using the method indicated below.

First, polycarbonate resin composition pellets obtained by extrusion were dissolved by mixing with 30 volumes of methylene chloride followed by collecting the soluble matter by celite filtration. Subsequently, the solid obtained after removing the solvent from the resulting solution was adequately dried and the specific viscosity ($\eta_{sp}$) of a solution obtained by dissolving 0.7 g of the solid in 100 ml of methylene chloride was measured at 20°C. Mv as calculated according to the following equation was then taken to be the viscosity-average molecular weight.

$$\eta_{sp}/c = [\eta] + 0.45 \times [\eta]^2 c$$

$$[\eta] = 1.23 \times 10^{-4}\ Mv^{0.83}$$

$\eta sp$: specific viscosity
$\eta$: intrinsic viscosity
c: constant (= 0.7)
Mv: viscosity-average molecular weight

### (2) Composite Ratio

The composite ratio of a polycarbonate resin composition was calculated by dissolving 40 mg of polycarbonate resin in 0.6 ml of deuterated chloroform solution, measuring the 1H-NMR spectrum with a 400 MHz nuclear magnetic resonance system manufactured by JEOL Ltd., and calculating the composite ratio from the area integral ratio of the spectral peak characteristic to each constituent unit.

### (3) Glass Transition Temperature

Glass transition temperature was measured using the DSC-2910 Thermal Analysis System manufactured by TA Instruments in accordance with JIS K7121 under conditions of a heating rate of 20°C/min in a nitrogen atmosphere (nitrogen flow rate: 40 ml/min).

### (4) High-Speed Surface Impact Test

Impact energy was measured and fracture morphology was observed visually at the portion of the three-step

plate obtained in (6) below having a thickness of 2 mm using the Shimadzu Hydroshot HTM-1 at a test speed of 7 m/sec and impactor radius of 6.4 mm.

(5) Rockwell Hardness

Testing was carried out using the M Scale in compliance with JIS K7202-2. A flat plate having a length and width of 100 mm and thickness of 8 mm was used for the test piece.

(6) Amine Resistance

A three-step plate having a width of 50 mm, length of 90 mm and thickness of 3 mm (length: 20 mm), 2 mm (length: 45 mm) or 1 mm (length: 25 mm) from the gate side was molded at a pressure holding time of 20 seconds and cooling time of 20 seconds using a mold having a cavity surface having an arithmetic mean roughness (Ra) of 0.03 μm and using the J-75E3 Injection Molding Machine manufactured by Japan Steel Works Ltd. under conditions of a cylinder temperature of 300°C and mold temperature of 80°C. Soft urethane foam used in automobile seat cushion material was cut to a shape having a length and width of 50 mm and thickness of 5 mm using a cutter knife, sealed in a sealed glass container with the three-step plate, and allowed to stand for 1000 hours in a hot air dryer set to 85°C followed by visual observation of the test piece.

[EXAMPLE 1]

4,555 parts of 48% aqueous sodium hydroxide solution and 23,088 parts of ion exchange water were charged into a reaction vessel equipped with a thermometer, stirrer and reflux condenser, and after dissolving 741 parts of 6,6'-dihydroxy-3,3,3',3'-tetramethyl-1,1'-spirobiindane (abbreviated as SBI), 1,644 parts of bisphenol C (Honshu Chemical Industry Co., Ltd., abbreviated as BPC), 1,645 parts of bisphenol A (Nippon Steel Chemical Co., Ltd., abbreviated as BPA) and 8.06 parts of hydrosulfite (Wako Pure Chemical Co., Ltd.) therein, 20,433 parts of methylene chloride were added followed by blowing in 2,000 parts of phosgene over the course of 90 minutes while stirring at 15°C to 25°C. Following completion of blowing in the phosgene, 661 parts of a 48% aqueous sodium hydroxide solution and 91.4 parts of p-tert-butylphenol were added, and after resuming stirring and emulsifying, 4.1 parts of triethylamine were added followed by further stirring for 1 hour at 28°C to 35°C to complete the reaction.

After diluting and washing the reaction product with methylene chloride following completion of the reaction, hydrochloric acid was added to make the product acidic followed by rinsing with water and additionally rinsing with water until the conductivity of the aqueous phase became nearly equal to that of ion exchange water to obtain a methylene chloride solution of polycarbonate resin. Next, this solution was filtered through a filter having a mesh size of 0.3 μm and dropped into warm water in a kneader equipped with an isolation chamber and having a foreign object outlet in the bearing section followed by flaking the polycarbonate resin while distilling off the methylene chloride and pulverizing and drying the liquid-containing flakes to obtain a polycarbonate copolymer powder.

Subsequently, 0.07 parts by weight of ADK Stab PEP-36A (Adeka Corp., phosphorous-based stabilizer), 0.1 part by weight of Irganox 1076 (Ciba Specialty Chemicals Inc., hindered phenol-based antioxidant), 0.1 part by weight of Rikestar EW-400 (Riken Vitamin Co., Ltd., fatty acid ester) and 0.3 parts by weight of Chemisorb 79 (Chemipro Kasei Co., Ltd., benzotriazole-based ultraviolet absorber) were added to 100 parts by weight of the powder and mixed to uniformity followed by melt kneading extrusion of the powder while degassing with a vented twin-screw extruder (KTX-46, Kobe Steel Ltd.) to obtain polycarbonate resin composition pellets. Various evaluations were carried out using the pellets, the results of which are described in Table 1.

[EXAMPLE 2]

Polycarbonate resin composition pellets were obtained using the same method as Example 1 with the exception of using 2,261 parts of BPC, 741 parts of SBI, 1,097 parts of BPA and 84.2 parts of p-tert-butylphenol. The results of evaluations using these pellets are shown in Table 1.

[EXAMPLE 3]

Polycarbonate resin composition pellets were obtained using the same method as Example 1 with the exception of using 2,055 parts of BPC, 494 parts of SBI, 1,462 parts of BPA and 96.2 parts of p-tert-butylphenol. The results of evaluations using these pellets are shown in Table 1.

[EXAMPLE 4]

Polycarbonate resin composition pellets were obtained using the same method as Example 1 with the exception of using 2,466 parts of BPC, 494 parts of SBI, 1,097 parts of BPA and 72.2 parts of p-tert-butylphenol. The results of evaluations using these pellets are shown in Table 1.

[EXAMPLE 5]

Polycarbonate resin composition pellets were obtained using the same method as Example 1 with the exception of using 2,055 parts of BPC, 247 parts of SBI, 1,645 parts of BPA and 84.2 parts of p-tert-butylphenol. The results of evaluations using these pellets are shown in Table 1.

[EXAMPLE 6]

Polycarbonate resin composition pellets were obtained using the same method as Example 1 with the exception of using 1,644 parts of BPC, 988 parts of SBI, 1,462 parts of BPA and 108.2 parts of p-tert-butylphenol. The results of evaluations using these pellets are shown in Table 1.

[EXAMPLE 7]

Polycarbonate resin composition pellets were obtained using the same method as Example 1 with the exception of using 2,055 parts of BPC, 988 parts of SBI, 1,097 parts of BPA and 96.2 parts of p-tert-butylphenol. The results of evaluations using these pellets are shown in Table 1.

[EXAMPLE 8]

Polycarbonate resin composition pellets were obtained using the same method as Example 1 with the exception of using 1,439 parts of BPC, 1,235 parts of SBI, 1,462 parts of BPA and 91.4 parts of p-tert-butylphenol. The results of evaluations using these pellets are shown in Table 1.

[EXAMPLE 9]

Polycarbonate resin composition pellets were obtained using the same method as Example 1 with the exception of using 1,850 parts of BPC, 1,235 parts of SBI, 1,097 parts of BPA and 96.2 parts of p-tert-butylphenol. The results of evaluations using these pellets are shown in Table 1.

[EXAMPLE 10]

120.8 parts of SBI, 334.6 parts of BPC, 208.6 parts of BPA (2.61 mol in total), 588 parts of diphenyl carbonate (2.75 mol) and catalysts in the form of 0.005 parts of sodium hydroxide and 0.024 parts of tetramethylammonium hydroxide were charged into a reaction vessel equipped with a stirrer and distillation column followed by replacing the inside of the reaction vessel with nitrogen. This mixture was dissolved while heating to 180°C. Subsequently, the stirrer was rotated and the temperature inside the reaction vessel was maintained at 220°C. The pressure inside the reaction vessel was lowered from 101.3 kPa to 13.3 kPa over the course of 40 minutes while distilling off the by-product phenol. Continuing, a transesterification reaction was carried out for 80 minutes while holding the pressure inside the reaction vessel at 13.3 kPa and further distilling off the phenol.

The internal pressure was reduced from an absolute pressure of 13.3 kPa to 2 kPa and the temperature was further raised to 260°C followed by removing the distilled off phenol outside the system. Moreover, after continuing to raise the temperature and the pressure inside the reaction vessel reached 0.3 kPa or less, a polycondensation reaction was carried out while maintaining internal pressure. The final temperature inside the reaction vessel was made to be 295°C. The polycondensation reaction was completed when the stirrer of the reaction vessel reached a preliminary prescribed stirring power. The duration of the polycondensation reaction in the reaction vessel was 120 minutes. Next, in a melt state, 0.0023 parts of tetrabutylphosphonium dodecyl benzenesulfonate ($4 \times 10^{-5}$ mol/mol of bisphenol) were added as catalyst neutralizer followed by continuing the reaction for 10 minutes at 295°C and 10 Torr or less to obtain a polycarbonate copolymer.

The resulting polycarbonate copolymer was fed to a vented twin-screw extruder (KTX-46, Kobe Steel Ltd.) with a gear pump. At an intermediate point of the extruder, 0.07 parts by weight of ADK Stab PEP-36A (Adeka Corp., phosphorous-based stabilizer), 0.1 part by weight of Irganox 1076 (Ciba Specialty Chemicals Inc., hindered phenol-based antioxidant), 0.1 part by weight of Rikestar EW-400 (Riken Vitamin Co., Ltd., fatty acid ester) and 0.3 parts by weight of Chemisorb 79 (Chemipro Kasei Co., Ltd., benzotriazole-based ultraviolet absorber) were added followed by melt kneading extrusion while degassing at an inlet barrel temperature of 230°C, outlet barrel temperature of 270°C and polycarbonate resin outlet temperature of 285°C and extruding into the shape of a strand from the outlet of the twin-screw extruder, and after solidifying by cooling with water, the strand was cut into pellets with a rotary cutter to obtain polycarbonate resin composition pellets. The results of evaluations using the pellets are shown in Table 1.

[COMPARATIVE EXAMPLE 1]

Polycarbonate resin composition pellets were obtained using the same method as Example 1 with the exception of using 1,233 parts of BPC, 741 parts of SBI, 2,011 parts of BPA and 91.4 parts of p-tert-butylphenol. The results of evaluations using these pellets are shown in Table 2.

[COMPARATIVE EXAMPLE 2]

Polycarbonate resin composition pellets were obtained using the same method as Example 1 with the exception of using 2,466 parts of BPC, 741 parts of SBI, 914 parts of BPA and 91.4 parts of p-tert-butylphenol. The results of evaluations using these pellets are shown in Table 2.

[COMPARATIVE EXAMPLE 3]

Polycarbonate resin composition pellets were obtained using the same method as Example 1 with the exception of using 1,932 parts of BPC, 148 parts of SBI, 1,828 parts of BPA and 84.2 parts of p-tert-butylphenol. The results of evaluations using these pellets are shown in Table 2.

[COMPARATIVE EXAMPLE 4]

Polycarbonate resin composition pellets were obtained using the same method as Example 1 with the exception of using 1,644 parts of BPC, 1,481 parts of SBI, 1,097 parts of BPA and 96.2 parts of p-tert-butylphenol. The results of evaluations using these pellets are shown in Table 2.

[COMPARATIVE EXAMPLE 5]

Polycarbonate resin composition pellets were obtained using the same method as Example 1 with the exception of using 2,877 parts of BPC, 247 parts of SBI, 914 parts of BPA and 72.2 parts of p-tert-butylphenol. The results of evaluations using these pellets are shown in Table 2.

[COMPARATIVE EXAMPLE 6]

Polycarbonate resin composition pellets were obtained using the same method as Example 1 with the exception of not using BPC and using 1,975 parts of SBI, 2,193 parts of BPA and 91.4 parts of p-tert-butylphenol. The results of evaluations using these pellets are shown in Table 2.

[COMPARATIVE EXAMPLE 7]

Polycarbonate resin composition pellets were obtained using the same method as Example 1 with the exception of not using BPA and using 3,700 parts of BPC, 494 parts of SBI and 81.8 parts of p-tert-butylphenol. The results of evaluations using these pellets are shown in Table 2.

[COMPARATIVE EXAMPLE 8]

Polycarbonate resin composition pellets were obtained using the same method as Example 1 with the exception of not using BPC and using 494 parts of SBI, 3,290 parts of BPA and 69.8 parts of p-tert-butylphenol. The results of evaluations using these pellets are shown in Table 2.

[COMPARATIVE EXAMPLE 9]

Polycarbonate resin composition pellets were obtained using the same method as Example 1 with the exception

of not using SBI and using 2,055 parts of BPC, 1,828 parts of BPA and 89.0 parts of p-tert-butylphenol. The results of evaluations using these pellets are shown in Table 2.

[COMPARATIVE EXAMPLE 10]

Polycarbonate resin composition pellets were obtained using the same method as Example 1 with the exception of not using BPA or SBI and using 4,111 parts of BPC and 77.1 parts of p-tert-butylphenol. The results of evaluations using these pellets are shown in Table 2.

[COMPARATIVE EXAMPLE 1 1]

A polycarbonate resin manufactured by Teijin Ltd. (Panlite L-1225L) was used. The results of evaluations using this polycarbonate resin are shown in Table 2.

[COMPARATIVE EXAMPLE 12]

50 parts by weight of the polycarbonate resin of Comparative Example 8 and 50 parts by weight of the polycarbonate resin of Comparative Example 10 were uniformly blended, and after adding 0.07 parts by weight of ADK Stab PEP-36A (Adeka Corp.), 0.1 part by weight of Irganox 1076 (Ciba Specialty Chemicals Inc.), 0.1 part by weight of Rikestar EW-400 (Riken Vitamin Co., Ltd.) and 0.3 parts by weight of Chemisorb 79 (Chemipro Kasei Co., Ltd.) based on 100 parts by weight of the powder and mixing to uniformity, the powder was subjected to melt kneading extrusion while degassing with a vented twin-screw extruder (KTX-46, Kobe Steel Ltd.) to obtain polycarbonate resin composition pellets. Various evaluations were carried out using the pellets, the results of which are described in Table 2.

[Table 1]

| | Units | Ex.1 | Ex.2 | Ex.3 | Ex.4 | Ex.5 | Ex.6 | Ex.7 | Ex.8 | Ex.9 | Ex.10 |
|---|---|---|---|---|---|---|---|---|---|---|---|
| Divalent phenol derived from constituent unit (A) | - | SBI | SBI | SBI | SBI | SBI | SBI | SBI | SBI | SBI | SBI |
| Divalent phenol derived from constituent unit (B) | - | BPC | BPC | BPC | BPC | BPC | BPC | BPC | BPC | BPC | BPC |
| Divalent phenol derived from constituent unit (C) | - | BPA | BPA | BPA | BPA | BPA | BPA | BPA | BPA | BPA | BPA |
| Composite ratio: (A)/(B)/(C) | mol% | 15/40/45 | 15/55/30 | 10/50/40 | 10/60/30 | 5/50/45 | 20/40/40 | 20/50/30 | 25/35/40 | 25/45/30 | 15/50/35 |
| Viscosity-average molecular weight | - | 20,100 | 22,400 | 18,700 | 28,400 | 22,200 | 16,700 | 18,500 | 20,000 | 18,600 | 19,400 |
| Glass transition temperature | °C | 150 | 146 | 143 | 141 | 140 | 154 | 151 | 159 | 157 | 147 |
| Fracture morphology | - | Ductile | Ductile | Ductile | Ductile | Ductile | Ductile | Ductile | Ductile | Ductile | Ductile |
| Impact energy | J | 35 | 28 | 33 | 26 | 30 | 26 | 28 | 28 | 28 | 27 |
| Rockwell hardness | - | 95 | 100 | 96 | 99 | 95 | 97 | 101 | 97 | 101 | 100 |
| Amine resistance | - | No change | No change | No change | No change | No change | No change | No change | No change | No change | No change |

[Table 2]

| | Units | Comp. Ex.1 | Comp. Ex.2 | Comp. Ex. 3 | Comp. Ex.4 | Comp. Ex. 5 | Comp. Ex.6 | Comp. Ex. 7 | Comp Ex.8 | Comp. Ex. 9 | Comp. Ex. 10 | Comp. Ex.11 | Comp Ex.12 |
|---|---|---|---|---|---|---|---|---|---|---|---|---|---|
| Divalent phenol derived from constituent unit (A) | - | SBI | SBI | SBI | SBI | SBI | SBI | SBI | SBI | - | - | - | SBI |
| Divalent phenol derived from constituent unit (B) | - | BPC | BPC | BPC | BPC | BPC | - | BPC | - | BPC | BPC | - | BPC |
| Divalent phenol derived from constituent unit (C) | - | BPA | BPA | BPA | BPA | BPA | BPA | - | BPA | BPA | - | BPA | BPA |
| Composite ratio: (A)/(B)/(C) | mol% | 15/30/55 | 15/60/25 | 3/47/50 | 30/40/30 | 5/70/25 | 40/0/60 | 10/90/0 | 10/0/90 | 0/50/50 | 0/100/0 | 0/0/100 | 5/50/45 |
| Viscosity-averaye molecular weight | - | 20,500 | 20,300 | 22,700 | 18,900 | 28,500 | 20,400 | 22,700 | 26,400 | 21,500 | 27,100 | 20,000 | 26,800 |
| Glass transition temperature | °C | 153 | 144 | 135 | 165 | 131 | 188 | 133 | 158 | 131 | 121 | 148 | 142 |
| Fracture morphology | - | Ductile | Brittle | Ductile | Ductile | Brittle | Brittle | Brittle | Ductile | Ductile | Brittle | Ductile | Brittle |
| Impact energy | J | 33 | 4 | 34 | 36 | 1 | <1 | <1 | 36 | 32 | <1 | 40 | 8 |
| Rockwell hardness | - | 90 | 102 | 89 | 101 | 101 | 88 | 102 | 72 | 88 | 102 | 68 | 88 |
| Amine resistance | - | Surface whitening | No change | No change | No change | No change | Surface whitening | No change | Surface whitening | No change | No change | Surface whitening | Surface whitening |
| Note: Comparative Example 12 is a 50/50 blend of the polycarbonate copolymers of Comparative Examples 8 and 10. | | | | | | | | | | | | | |

INDUSTRIAL APPLICABILITY

The polycarbonate resin of the present invention can be used, without requiring coating treatment, for automotive interior parts such as various types of display devices, protective parts and translucent parts, examples of which include lamp lenses for interior lighting, display meter covers, meter dials, various types of switch covers, display covers, heat control panels, instrument panels, center instrument clusters, center panels, room lamp lenses, and head-up displays.

## Claims

**1.** A polycarbonate copolymer composed of a main component unit consisting of:

(A) a constituent unit (A) represented by the following formula (1):

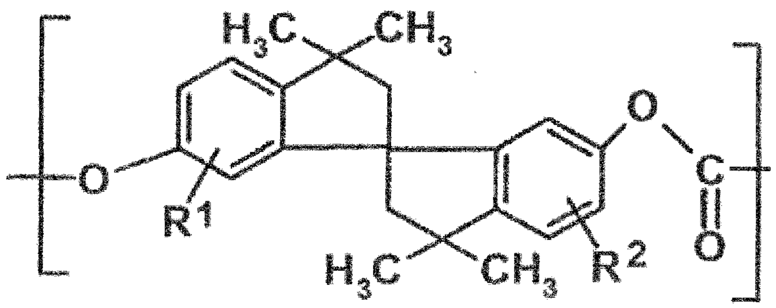

(1)

wherein, $R^1$ and $R^2$ respectively and independently represent a hydrogen atom, hydrocarbon group having 1 to 9 carbon atoms that may contain an aromatic group, or halogen atom,
(B) a constituent unit (B) represented by the following formula (2):

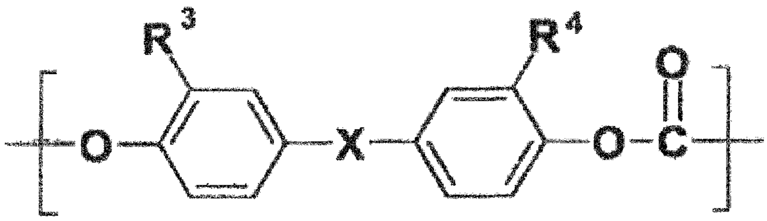

(2)

wherein, $R^3$ and $R^4$ respectively and independently represent an alkyl group having 1 to 6 carbon atoms or a halogen atom, X represents a single bond, substituted or unsubstituted alkylene group, substituted or unsubstituted alkanediyl group, sulfur atom or oxygen atom, and
(C) a constituent unit (C) represented by the following formula (3):

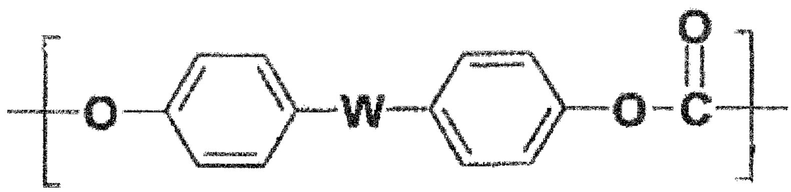

(3)

wherein, W represents a single bond, substituted or unsubstituted alkylene group, substituted or unsubstituted alkanediyl group, sulfur atom or oxygen atom; and,
the proportion of constituent unit (A) among all constituent units is 5 mol% to 25 mol%, the proportion of constituent unit (B) is 35 mol% to 60 mol%, and the proportion of constituent unit (C) is 30 mol% to 50 mol%.

**2.** The polycarbonate copolymer according to claim 1, wherein $R^1$ and $R^2$ in formula (1) respectively and independently represent a hydrogen atom or alkyl group having 1 to 6 carbon atoms, $R^3$ and $R^4$ in formula (2) respectively and

independently represent an alkyl group having 1 to 6 carbon atoms, X represents a single bond, substituted or unsubstituted alkylene group having 1 to 10 carbon atoms, or substituted or unsubstituted alkanediyl group having 1 to 10 carbon atoms, and W in formula (3) represents a single bond, substituted or unsubstituted alkylene group having 1 to 10 carbon atoms, or substituted or unsubstituted alkanediyl group having 1 to 10 carbon atoms.

**3.** The polycarbonate copolymer according to claim 1 or 2, wherein the glass transition temperature thereof is 140°C to 160°C, measured as indicated in the specification.

**4.** The polycarbonate copolymer according to any of claims 1 to 3, wherein Rockwell hardness as measured with a Rockwell hardness tester (M scale) in compliance with JIS K7202-2 is 95 to 120.

**5.** The polycarbonate copolymer according to any of claims 1 to 4, wherein impact energy in a high-speed surface impact test as measured in compliance with JIS K7211-2 is 25 J or more and the fracture morphology is that of a ductile fracture.

**6.** The polycarbonate copolymer according to any of claims 1 to 5, wherein viscosity-average molecular weight is 15,000 to 40,000, measured as indicated in the specification.

**7.** The polycarbonate copolymer according to any of claims 1 to 6, wherein constituent unit (A) is a constituent unit derived from 6,6'-dihydroxy-3,3,3',3'-tetramethyl-1,1'-spirobiindane.

**8.** The polycarbonate copolymer according to any of claims 1 to 7, wherein constituent unit (B) is a constituent unit derived from 2,2-bis(4-hydroxy-3-methylphenyl)propane.

**9.** The polycarbonate copolymer according to any of claims 1 to 8, wherein constituent unit (C) is a constituent unit derived from 2,2-bis(4-hydroxyphenyl)propane.

**10.** A resin composition containing the polycarbonate copolymer according to any of claims 1 to 9 and a mold release agent.

**11.** A resin composition containing the polycarbonate copolymer according to any of claims 1 to 9, a phosphorous-based stabilizer and/or a hindered phenol-based stabilizer.

**12.** A resin composition containing the polycarbonate copolymer according to any of claims 1 to 9 and an ultraviolet absorber.

**13.** A molded article obtained by injection molding the polycarbonate copolymer according to any of claims 1 to 9.

**14.** A sheet or film obtained by extrusion molding the polycarbonate copolymer according to any of claims 1 to 9.

**15.** An automotive interior part using the molded article of claim 13 or the sheet or film of claim 14.

## Patentansprüche

**1.** Polycarbonatpolymer, das aus einer Hauptkomponenteneinheit besteht, welche besteht aus:

(A) einer Bestandteilseinheit (A), dargestellt durch die folgende Formel (1):

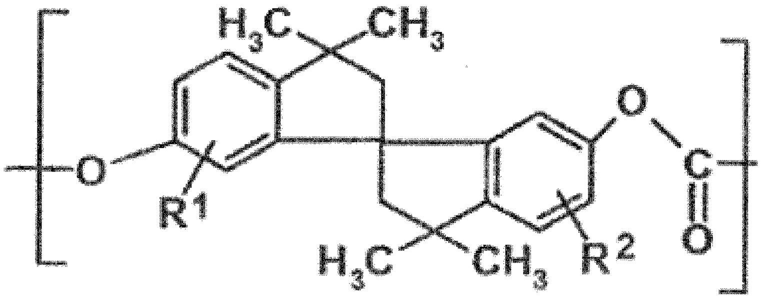

(1)

worin $R^1$ und $R^2$ jeweils und unabhängig ein Wasserstoffatom, eine Kohlenwasserstoffgruppe mit 1 bis 9 Kohlenstoffatom(en), die eine aromatische Gruppe enthalten kann, oder ein Halogenatom darstellen;
(B) einer Bestandteilseinheit (B), dargestellt durch die folgende Formel (2):

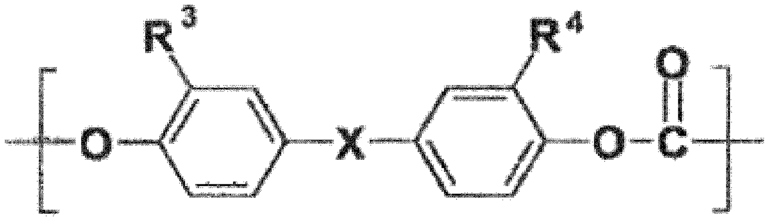

(2)

worin $R^3$ und $R^4$ jeweils und unabhängig eine Alkylgruppe mit 1 bis 6 Kohlenstoffatomen oder ein Halogenatom darstellen, X eine Einfachbindung, eine substituierte oder unsubstituierte Alkylengruppe, eine substituierte oder unsubstituierte Alkandiylgruppe, ein Schwefelatom oder ein Sauerstoffatom darstellt; und einer Bestandteilseinheit (C), dargestellt durch die folgende Formel (3):

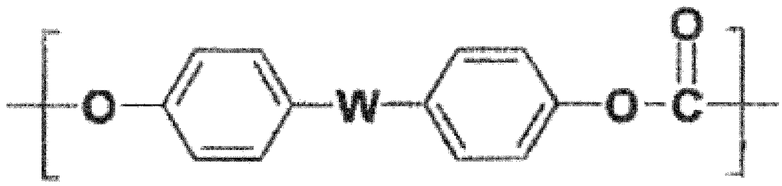

(3)

worin W eine Einfachbindung, eine substituierte oder unsubstituierte Alkylengruppe, eine substituierte oder unsubstituierte Alkandiylgruppe, ein Schwefelatom oder ein Sauerstoffatom darstellt; und wobei der Mengenanteil von Bestandteilseinheit (A) an allen Bestandteilseinheiten 5 mol-% bis 25 mol-% beträgt, der Mengenanteil von Bestandteilseinheit (B) 35 mol-% bis 60 mol-% beträgt und der Mengenanteil von Bestandteilseinheit (C) 30 mol-% bis 50 mol-% beträgt.

**2.** Polycarbonatcopolymer gemäß Anspruch 1, wobei $R^1$ und $R^2$ in Formel (1) jeweils und unabhängig ein Wasserstoffatom oder eine Alkylgruppe mit 1 bis 6 Kohlenstoffatom(en) darstellen, $R^3$ und $R^4$ in Formel (2) jeweils und unabhängig eine Alkylgruppe mit 1 bis 6 Kohlenstoffatom(en) darstellen, X eine Einfachbindung, eine substituierte oder unsubstituierte Alkylengruppe mit 1 bis 10 Kohlenstoffatom(en) oder eine substituierte oder unsubstituierte Alkandiylgruppe mit 1 bis 10 Kohlenstoffatom(en) darstellt und W in Formel (3) eine Einfachbindung, eine substituierte oder unsubstituierte Alkylengruppe mit 1 bis 10 Kohlenstoffatom(en) oder eine substituierte oder unsubstituierte Alkandiylgruppe mit 1 bis 10 Kohlenstoffatom(en) darstellt.

**3.** Polycarbonatcopolymer gemäß Anspruch 1 oder 2, wobei die Glasübergangstemperatur desselben 140°C bis 160°C, gemessen wie in der Beschreibung angegeben, ist.

**4.** Polycarbonatcopolymer gemäß Anspruch 1 bis 3, wobei die Rockwell-Härte, wie sie mit einem Rockwell-Härte-Testgerät (M-Skala) gemäß JIS K 7202-2 gemessen wird, 95 bis 120 ist.

**5.** Polycarbonatcopolymer gemäß irgendeinem der Ansprüche 1 bis 4, wobei die Schlagenergie in einer Hochgeschwindigkeits-Oberflächenschlagprüfung, wie sie gemäß JIS K 7211-2 gemessen wird, 25 J oder mehr ist und die Bruchmorphologie die eines duktilen Bruchs ist.

6. Polycarbonatcopolymer gemäß irgendeinem der Ansprüche 1 bis 5, wobei das viskositätsdurchschnittliches Molekulargewicht 15 000 bis 40 000, gemessen wie in der Beschreibung angegeben, ist.

7. Polycarbonatcopolymer gemäß irgendeinem der Ansprüche 1 bis 6, wobei Bestandteilseinheit (A) eine Bestandteilseinheit ist, die von 6,6'-Dihydroxy-3,3,3',3'-tetramethyl-1,1'-spirobi-indan abgeleitet ist.

8. Polycarbonatcopolymer gemäß irgendeinem der Ansprüche 1 bis 7, wobei Bestandteilseinheit (B) eine Bestandteilseinheit ist, die von 2,2-Bis(4-hydroxy-3-methylphenyl)propan abgeleitet, ist.

9. Polycarbonatcopolymer gemäß irgendeinem der Ansprüche 1 bis 7, wobei Bestandteilseinheit (C) eine Bestandteilseinheit ist, die von 2,2-Bis(4-hydroxy-3-methylphenyl)propan abgeleitet ist.

10. Harzzusammensetzung, die das Polycarbonatcopolymer gemäß irgendeinem der Ansprüche 1 bis 9 und ein Formentrennmittel enthält.

11. Harzzusammensetzung, die das Polycarbonatcopolymer gemäß irgendeinem der Ansprüche 1 bis 9, einen Stabilisator auf Phosphorbasis und/oder einen Stabilisator auf der Basis von behindertem Phenol enthält.

12. Harzzusammensetzung, die das Polycarbonatcopolymer gemäß irgendeinem der Ansprüche 1 bis 9 und einen Ultraviolett-Absorptionsmittel enthält.

13. Geformter Gegenstand, erhalten durch Spritzgießen des Polycarbonatcopolymers gemäß irgendeinem der Ansprüche 1 bis 9.

14. Folie oder Film, erhalten durch Strangpressen des Polycarbonatcopolymers gemäß irgendeinem der Ansprüche 1 bis 9.

15. Fahrzeug-Innenteil , das den geformten Gegenstand von Anspruch 13 oder die Folie oder den Film von Anspruch 14 verwendet.

## Revendications

1. Copolymère de polycarbonate composé d'un motif de composant principal consistant en :

(A) un motif constituant (A) représenté par la formule suivante (I) :

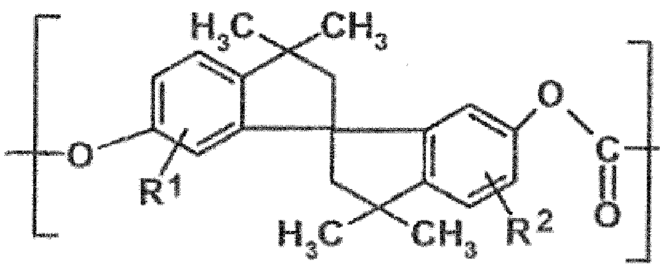

(1)

dans laquelle $R^1$ et $R^2$ représentent, respectivement et indépendamment, un atome d'hydrogène, un groupe hydrocarboné ayant de 1 à 9 atomes de carbone pouvant contenir un groupe aromatique, ou un atome d'halogène,
(B) un motif constituant (B) représenté par la formule suivante (2) :

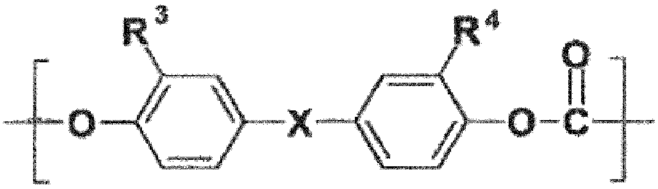

(2)

dans laquelle $R^3$ et $R^4$ représentent, respectivement et indépendamment, un groupe alkyle ayant de 1 à 6 atomes de carbone ou un atome d'halogène, X représente une simple liaison, un groupe alkylène substitué ou non substitué, un groupe alcanediyle substitué ou non substitué, un atome de soufre ou un atome d'oxygène, et (C) un motif constituant (C) représenté par la formule suivante (3) :

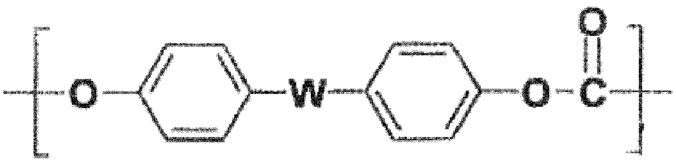

(3)

dans laquelle W représente une simple liaison, un groupe alkylène substitué ou non substitué, un groupe alcanediyle substitué ou non substitué, un atome de soufre ou un atome d'oxygène ; et,
la proportion de motif constituant (A) entre tous les motifs constituants est de 5 % en moles à 25 % en moles, la proportion de motif constituant (B) est de 35 % en moles à 60 % en moles et la proportion de motif constituant (C) est de 30 % en moles à 50 % en moles.

**2.** Copolymère de polycarbonate selon la revendication 1, dans lequel $R^1$ et $R^2$ dans la formule (1) représentent, respectivement et indépendamment, un atome d'hydrogène ou un groupe alkyle ayant de 1 à 6 atomes de carbone, $R^3$ et $R^4$ dans la formule (2) représentent, respectivement et indépendamment, un groupe alkyle ayant de 1 à 6 atomes de carbone, X représente une simple liaison, un groupe alkylène substitué ou non substitué ayant de 1 à 10 atomes de carbone, ou un groupe alcanediyle substitué ou non substitué ayant de 1 à 10 atomes de carbone, et W dans la formule (3) représente une simple liaison, un groupe alkylène substitué ou non substitué ayant de 1 à 10 atomes de carbone, ou un groupe alcanediyle substitué ou non substitué ayant de 1 à 10 atomes de carbone.

**3.** Copolymère de polycarbonate selon la revendication 1 ou 2, dans lequel la température de transition vitreuse de celui-ci est de 140°C à 160°C, mesurée comme indiqué dans la spécification.

**4.** Copolymère de polycarbonate selon l'une quelconque des revendications 1 à 3, dans lequel la dureté de Rockwell telle que mesurée dans un testeur de dureté de Rockwell (échelle M) conformément à la norme japonaise JIS K7202-2 est de 95 à 120.

**5.** Copolymère de polycarbonate selon l'une quelconque des revendications 1 à 4, dans lequel l'énergie de choc dans un test de choc sur surface à haute vitesse, telle que mesurée conformément à la norme japonaise JIS K7211-2 est de 25 J ou plus et la morphologie de fracture est celle d'une fracture ductile.

**6.** Copolymère de polycarbonate selon l'une quelconque des revendications 1 à 5, dans lequel le poids moléculaire moyen en viscosité est de 15 000 à 40 000, mesuré comme indiqué dans la spécification.

**7.** Copolymère de polycarbonate selon l'une quelconque des revendications 1 à 6, dans lequel le motif constituant (A) est un motif constituant dérivé du 6,6'-dihydroxy-3,3,3',3'-tétraméthyl-1,1'-spirobiindane.

**8.** Copolymère de polycarbonate selon l'une quelconque des revendications 1 à 7, dans lequel le motif constituant (B) est un motif constituant dérivé du 2,2-bis(4-hydroxy-3-méthylphényl) propane.

**9.** Copolymère de polycarbonate selon l'une quelconque des revendications 1 à 8, dans lequel le motif constituant (C) est un motif constituant dérivé du 2,2-bis(4-hydroxyphényl)propane.

**10.** Composition de résine contenant le copolymère de polycarbonate selon l'une quelconque des revendications 1 à

9 et un agent de démoulage.

**11.** Composition de résine contenant le copolymère de polycarbonate selon l'une quelconque des revendications 1 à 9, un stabilisant à base de phosphore et/ou un stabilisant à base de phénol empêché.

**12.** Composition de résine contenant le copolymère de polycarbonate selon l'une quelconque des revendications 1 à 9 et un absorbeur d'ultraviolet.

**13.** Article moulé obtenu par moulage par injection du copolymère de polycarbonate selon l'une quelconque des revendications 1 à 9.

**14.** Feuille ou film obtenu par moulage par extrusion du copolymère de polycarbonate selon l'une quelconque des revendications 1 à 9.

**15.** Pièce intérieure d'automobile utilisant l'article moulé selon la revendication 13 ou la feuille ou le film selon la revendication 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009500195 A
- JP S64069625 A
- JP H08183852 A
- JP H08034846 A
- JP 2002117580 A
- JP 2003252978 A
- JP 2016141721 A
- JP 2016141722 A
- WO 03080728 A
- JP H6172508 A
- JP H827370 A
- JP 2001055435 A
- JP 2003200421 A